# EUROPÄISCHE PATENTSCHRIFT

(11) **EP 0 831 383 B1**
(45) Veröffentlichungstag und Bekanntmachung des Hinweises auf die Patenterteilung: **24.11.1999**
(21) Anmeldenummer: 97114894.5
(22) Anmeldetag: 28.08.1997
(51) Int. Cl.: G05D 16/20, B60T 17/18

(54) **Steuergerät für eine Druckluftbeschaffungsanlage eines Kraftfahrzeuges**
Controller for installation of compressed air production for vehicles
Régulateur pour installations de production d'air comprimé dans des véhicules

(30) Priorität: 19.09.1996 DE 19638226
(43) Veröffentlichungstag der Anmeldung: 25.03.1998
(73) Patentinhaber: Haldex Brake Products GmbH & Co. KG, 69123 Heidelberg (DE)
(72) Erfinder: Blanz, Roland, 69253 Heiligkreuzsteinach (DE)
(74) Vertreter: Patentanwälte Rehberg + Hüppe

(56) Entgegenhaltungen:
- EP-A- 0 689 117
- DE-A- 3 506 178
- DE-A- 4 421 575
- US-A- 4 018 485
- US-A- 4 058 349
- PATENT ABSTRACTS OF JAPAN vol. 007, no. 217 (M-245), 27.September 1983 & JP 58 110344 A (FUJI JUKOGYO KK), 30.Juni 1983,

## Beschreibung

Die Erfindung bezieht sich auf die Verwendung eines von der Steuerelektronik eines Steuergerätes für eine Druckluftbeschaffungsanlage eines Kraftfahrzeuges generierten Signals und zeigt auf ein Steuergerät sowie eine Druckluftbeschaffungsanlage für ein solches Kraftfahrzeug.

Ein Steuergerät der eingangs beschriebenen Art ist aus der DE 44 21 575 Al bekannt. Im Gehäuse dieses elektronischen Druckreglers sind ein Mehrkreisschutzventil mit seinen Überströmventilen und ein Trockner angeordnet. Im Gehäuse des Druckreglers ist weiterhin ein Durchtrittsraum für die von einer Druckluftquelle herangeführte Druckluft vorgesehen. Der Durchtrittsraum ist über ein gesteuertes Auslaßventil in dessen Offenstellung mit der Atmosphäre verbindbar. Jedes Überströmventil weist eine Steuer- und Anzeigeeinheit auf, die jeweils nach dem Rückschlagventil des Druckreglers abzweigen. Jede Steuer- und Anzeigeeinheit umfasst auch ein entgegen der Strömungsrichtung schließendes Rückschlagventil, eine Betätigungseinheit zum gesteuerten Öffnen eines Durchlaßventils und einen Drucksensor zum Erfassen des Druckes nach dem gesteuerten Rückschlagventil. Damit wird eine Vielzahl von Betriebsweisen ermöglicht.

Ein weiterer Druckregler ist aus der DE 35 06 178 A1 bekannt. Der Druckregler besitzt ein Gehäuse mit einem Eingangsanschluß und einem zur Atmosphäre führenden Auslaß. An einem Durchgangsanschluß ist üblicherweise eine letztlich zu einem Luftbehälter führende Leitung angeschlossen. Zwischen dem Durchtrittsraum und dem Durchgangsanschluß ist ein Rückschlagventil vorgesehen, welches in Richtung auf den Durchgangsanschluß öffnet und eine Rückströmung in entgegengesetzter Richtung verhindert. Vor dem Rückschlagventil ist ein Auslaßventil gebildet, dem eine Einrichtung zum abwechselnden Öffnen und Schließen zugeordnet ist, die ein Magnetventil aufweist, welches als 3/2-Wege-Ventil ausgebildet ist. Es ist ein Drucksensor vorgesehen, der als Druck/Spannungswandler ausgebildet ist und der den Druck nach dem Rückschlagventil, also am Durchgangsanschluß, erfaßt. Das Auslaßventil ist nach Art eines Schnellöseventils mit einer eingespannten Membran ausgebildet. Über eine elektrische Schalteinrichtung wird das Magnetventil angesteuert, um die Lastlaufphase und die Leerlaufphase des Druckreglers zu steuern. Damit wird ein elektronischer Druckregler geschaffen, der die Funktionen der bisher bekannten mechanisch aufgebauten Druckregler erfüllt.

Der Erfindung liegt die Aufgabe zugrunde, ein Steuergerät und/oder eine Druckluftbeschaffungsanlage bereitzustellen, die es ermöglichen, bei Unterschreiten eines einer Mindestverzögerung zugeordneten Drucks in den der Betriebsbremsanlage zugeordneten Behältern für Vorratsluft das Lösen der Feststellbremsanlage des Kraftfahrzeuges zu unterbinden. Mit anderen Worten sollen die Behälter der Betriebsbremskreise erst soweit aufgefüllt werden, daß eine Mindestverzögerung des Kraftfahrzeugs beim Bremsen möglich ist, bevor die Feststellbremse gelöst und das Kraftfahrzeug bewegt werden kann.

Erfindungsgemäß wird dies durch die Verwendung eines von einer Steuerelektronik in Abhängigkeit von einem für eine Mindestverzögerung eines Kraftfahrzeuges zu niedrigen Vorratsdruck in den den Betriebsbremskreisen zugeordneten Behältern generierten Signals zum Absperren einer zu einem Handbremsventil führenden Versorgungsleitung erreicht. Die Erfindung bezieht sich ebenfalls auf ein Steuergerät für eine Druckluftbeschaffungsanlage nach Anspruch 2 sowie auf eine Druckluftbeschaffungsanlage nach Anspruch 6.

Die Erfindung geht von dem Gedanken aus, mit Hilfe der Steuerelektronik ein Signal zu generieren, daß bei Unterschreiten eines fest gewählten oder einstellbaren Druckwertes des Vorratsdrucks in den Behältern, die den Betriebsbremskreisen zugeordnet sind, auftritt. Bei Auftreten dieses Signals wird die Versorgungsleitung zum Handbremsventil abgesperrt, also das Lösen der Feststellbremse unmöglich gemacht, damit das Kraftfahrzeug (noch) nicht bewegt, d. h. hinweggefahren werden kann. All dies geschieht während der Lastlaufphase des Druckreglers, wobei die Schaltung so abgestimmt sein kann, daß das Signal auch nur dann auftritt, wenn sich der Druckregler in der Lastlaufphase befindet. Damit ist sichergestellt, daß der Auffüllvorgang der Behälter für die einzelnen Kreise fortgesetzt wird ohne daß das Fahrzeug bewegt werden kann. Infolgedessen steigt der Druck der Druckluft in den Behältern. Da jeder Behälter über einen Drucksensor ohnehin überwacht wird, ist es sehr leicht möglich, festzustellen, wann der Druck diesen eingestellten Schwellenwert überschreitet. Zu diesem Zeitpunkt ist die Versorgungsleitung auf Durchgang geschaltet, so daß dann die Betätigung des Handbremsventils und das Lösen der Feststellbremse möglich wird.

Diese Erfindung kann beispielsweise an einem Steuergerät, also an einem singulären Anlagenteil verwirklicht werden. Andererseits ist aber auch eine Verwirklichung innerhalb einer Druckluftbeschaffungsanlage möglich, also einer Anlage, die mehrere verschiedene singuläre Elemente aufweist, die durch entsprechende elektrische und pneumatische Leitungen verbunden sind.

Ein solches Steuergerät für eine Druckluftbeschaffungsanlage eines Kraftfahrzeuges ist mit einem einen Eingangs-, einen Durchgangsanschluß und einen Auslaß aufweisenden Gehäuse, in dem ein Druckregler für die herangeführte Druckluft vorgesehen ist, der über ein gesteuertes Auslaßventil in dessen Offenstellung mit der Atmosphäre verbindbar ist, mit einem dem Druckregler nachgeschalteten Rückschlagventil, und mit einem integrierten Mehrkreisschutzventil ausgestattet, das mehrere Steuer- und Anzeigeeinheiten aufweist, die nach dem Rückschlagventil des Druckreglers abzweigen. Dabei ist für die Betätigung des gesteuerten Auslaßventils des Druckreglers und der Steuer- und Anzeigeeinheiten eine gemeinsame Steuerelektronik und zwischen dem Druckregler und dem nachgeschalteten Rückschlagventil ein regenerierbarer Trockner vorgesehen, der über die gemeinsame Steuerelektronik und ein Regenerations-Magnetventil mit nachgeschaltetem Rückschlagventil für die Ansteuerung des Trockners geschaltet wird. Dieses Steuergerät kennzeichnet sich erfindungsgemäß dadurch, daß die dem Handbremsventil zugeordnete Steuer- und Anzeigeeinheit zusätzlich eine Schließstellung für eine zu dem Handbremsventil führende Versorgungsleitung aufweist und einen pneumatisch ansteuerbaren Kolben zum Erreichen dieser Schließstellung besitzt, daß das Regenerations-Magnetventil über eine Steuerleitung mit der dem Handbremsventil zugeordneten Steuer- und Anzeigeeinheit verbunden ist, und daß die Steuerelektronik zur Generierung eines Signals in Abhängigkeit von einem für eine Mindestverzögerung des Kraftfahrzeuges zu niedrigen Vorratsdruck in den den Betriebsbremskreisen zugeordneten Behältern ausgebildet ist, mit dem das Regenerations-Magnetventil während der Lastlaufphase des Druckreglers ansteuerbar ist. Damit wird die Erfindung gleichsam in dem singulären Anlagenteil, nämlich dem Steuergerät verwirklicht. Die Steuer- und Anzeigeeinheit des Kreises mit der Versorgungsleitung, die zum Handbremsventil führt, ist geringfügig gegenüber den anderen Einheiten abgeändert ausgebildet, so daß hier zusätzlich eine Sperrstellung für das Absperren der Versorgungsleitung möglich wird. Die Sperrstellung wird dann eingenommen, wenn, wie eingangs bereits beschrieben, der Druck in den Behältern, die den Betriebsbremskreisen zugeordnet sind, noch zu niedrig ist, um damit eine gewisse Mindestverzögerung bei einer Bremsung zu erreichen. Es wäre also in diesem Moment zu gefährlich, mit dem Fahrvorgang des Kraftfahrzeuges zu beginnen. Dies wird dadurch verhindert, daß die Feststellbremse über das Handbremsventil noch nicht gelöst werden kann.

Die Steuerleitung kann an die vom Regenerations-Magnetventil zum Trockner führende Leitung vor einem Rückschlagventil mit nachgeschalteter Drossel angeschlossen sein. Damit wird über das generierte Signal das Regenerations-Magnetventil erregt, welches nunmehr zwei Funktionen ausführt. Wenn sich der Druckregler bei normal aufgefüllten Behältern in der Leerlaufphase befindet, schaltet das Regenerations-Magnetventil den Regenerationslauf des Trockners ein, d. h. es wird aus den Behältern Druckluft entnommen und rückwärts durch den Trockner in die Atmosphäre geführt, wobei die im Trockner niedergeschlagene Feuchtigkeit mitgenommen wird. Das von der Steuerelektronik generierte Signal wird andererseits dann auf das Regenerations-Magnetventil gegeben, wenn sich der Druckregler in der Lastlaufphase befindet und die eingestellte Druckhöhe in den Behältern, die den Betriebsbremskreisen zugeordnet sind, noch nicht erreicht ist. In diesem Fall kann zwar keine Regeneration des Trockners durchgeführt werden, weil die Lastlaufphase des Druckreglers überwiegt. Es ist aber dann möglich, daß Regenerations-Magnetventil gleichsam zum Erfüllen einer zweiten Funktion zu nutzen, nämlich der Schließstellung in der Versorgungsleitung zum Handbremsventil.

Dabei ist es möglich, daß daß von der dem Handbremsventil zugeordneten Steuer- und Anzeigeeinheit eine weitere Leitung ausgeht, die zu einem für einen weiteren Kreis bestimmten Behälter führt. Die Steuer- und Anzeigeeinheit besitzt also zwei Ausgangsanschlüsse und einen Eingangsanschluß. Die Steuereinheit ist elektrisch wie auch pneumatisch schaltbar. Als Regeneration-Magnetventil kann ein 3/2-Wege-Magnetventil mit nachgeschaltetem Rückschlagventil für die Regeneration vorgesehen sein. Ein solches Ventil kann zur Erbringung der beiden beschriebenen Funktionen genutzt werden.

Andererseits läßt sich die Erfindung auch bei einer Druckluftbeschaffungsanlage eines Kraftfahrzeuges mit dem im Oberbegriff des Anspruches 6 angegebenen Merkmalen verwirklichen. Die Druckluftbeschaffungsanlage kennzeichnet sich erfindungsgemäß dadurch, daß in einer Versorgungsleitung, die von der dem Handbremsventil zugeordneten Steuer- und Anzeigeeinheit zu dem Handbremsventil führt, ein Sperrventil, insbesondere ein Magnetventil, angeordnet ist, und daß die Steuerelektronik des Steuergeräts zur Generierung eines Signals in Abhängigkeit von einem für eine Mindestverzögerung des Kraftfahrzeuges zu niedrigen Vorratsdruck in den den Betriebsbremskreisen zugeordneten Behältern ausgebildet ist, mit dem das Sperrventil während der Lastlaufphase des Druckreglers ansteuerbar ist. Wichtig ist es dabei, daß Sperrventil an der richtigen Stelle in der Versorgungsleitung anzuordnen, und zwar so, daß sich das Handbremsventil nicht betätigen läßt bzw. trotz Betätigung keine Druckluft von diesem im Lösesinne ausgesteuert werden kann.

Es besteht die Möglichkeit, daß in der zum Handbremsventil führenden Versorgungsleitung ein Behälter für Vorratsluft vorgesehen ist, und daß das Sperrventil in der Versorgungsleitung zwischen dem Behälter und dem Handbremsventil angeordnet ist. Dabei ist es wichtig, letztlich das Nachströmen von Vorratsluft aus dem Behälter in das Handbremsventil zu verhindern.

Die Erfindung wird anhand bevorzugter Ausführungsbeispiele weiter verdeutlicht und beschrieben. Es zeigen:
- Fig. 1: Einen Schaltplan eines Steuergerätes als singuläres Anlagenteil, an dem die Erfindung verwirklicht ist,
- Fig. 2: einen Schaltplan einer Druckluftbeschaffungsanlage mit ihren für die Erfindung wesentlichen Teilen.

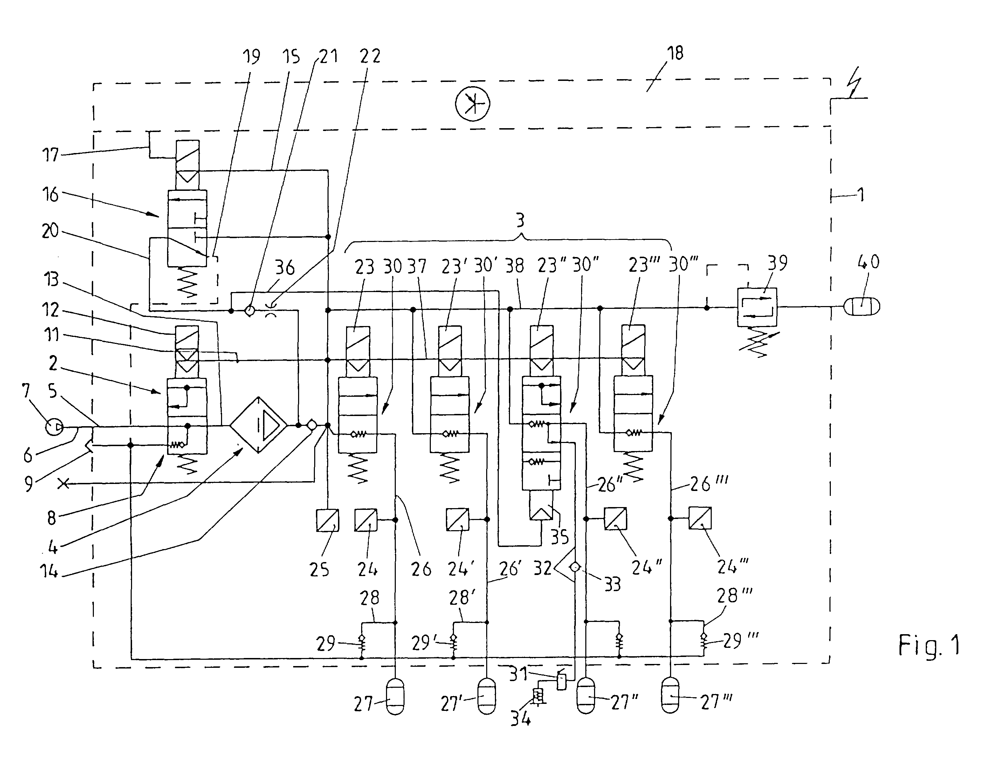

Bei der in Figur 1 dargestellten Ausführungsform sind in einem gemeinsamen Gehäuse 1 die Elemente eines Druckreglers 2, eines Mehrkreisschutzventils 3 und eines Trockners 4 integriert angeordnet. Das Gehäuse 1 bzw. der Druckregler 2 weist einen Eingangsanschluß 5 auf, zu dem eine von einem Kompressor 7 ausgehende Leitung 6 herangeführt ist. Der Eingangsanschluß 5 geht in einen Durchtrittsraum über, an den einerseits ein gesteuertes Auslaßventil 8 angeschlossen ist, welches zu einem in die Atmosphäre führenden Auslaß 9 führt. Das gesteuerte Auslaßventil 8 weist einen Ventilkörper auf, der mit einem eingezogenen Rand am Gehäuse 1 zusammenarbeitet und andererseits auf einer Feder 10 abgestützt ist. Dem Ventilkörper ist ein Kolben mit Stößel zugeordnet. Für den Kolben ist eine Druckkammer vorgesehen, zu der eine Leitung 11 führt, in der ein 3/2-Wege-Magnetventil 12 angeordnet ist.

Von dem Druckregler 2 führt eine Leitung 13 zu dem Trockner 4 und weiter zu einem Rückschlagventil 14 und weiter in einen nicht näher dargestellten Durchtrittsraum, der die Luftverzweigung zu den einzelnen Elementen beinhaltet. Von dort führt eine Leitung 15 zu einem Regenerations-Magnetventil 16, welches auch aus dem gleichen Durchtrittsraum mit Druckluft versorgt wird.

Das Regenerations-Magnetventil 16 weist die beiden ersichtlichen Schaltstellungen auf und wird über eine elektrische Leitung 17 von einer Steuerelektronik 18 angesteuert. Das Regenerations-Magnetventil 16 besitzt eine Entlüftung 19. Von ihm führt andererseits eine Leitung 20 über ein Rückschlagventil 21 und eine Drossel 22 zu dem Trockner 4. Diese Leitung 20 dient der Regeneration des Trockners 4. Die Leitung 20 endet zwischen dem Rückschlagventil 14 und dem Trockner 4 an der Leitung 13.

Das Mehrkreisschutzventil 3 besteht im Einzelnen aus mehreren Drucksicherungsventilen 23, 23', 23", 23''' und Drucksensoren 24, 24', 24" und 24'''. Ein weiterer Drucksensor 25 dient der Feststellung des Druckes unmittelbar nach dem Rückschlagventil 14 in dem gemeinsamen Durchströmraum, der zu allen Elementen führt. Es versteht sich, daß die Drucksensoren 24 und 25 mit der Steuerelektronik 18 verbunden sind. Je ein Drucksicherungsventil 23 und ein Drucksensor 24 bilden eine Steuer- und Anzeigeeinheit 30. So ist eine erste Steuer- und Anzeigeeinheit 30 vorgesehen, die dem ersten Betriebsbremskreis zugeordnet ist. Demzufolge führt eine Leitung 26 ausgangsseitig zu einem Behälter 27, wobei der Drucksensor 24 in dieser Leitung 26 vorgesehen ist. Von der Leitung 26 führt eine Abzweigleitung 28 über ein Sicherheitsventil 29 in die Atmosphäre. In analoger Weise ist eine Steuer- und Anzeigeeinheit 30' vorgesehen, die dem zweiten Betriebsbremskreis zugeordnet ist. Die einzelnen Elemente dieser Steuer-und Anzeigeeinheit 30' sind so aufgebaut, wie dies anhand der Steuer- und Anzeigeeinheit 30 beschrieben wurde.

Die Steuer- und Anzeigeeinheit 30" ist etwas abweichend ausgebildet. Sie ist einerseits dem Handbremsventil 31 und damit der Feststellbremsanlage zugeordnet. Zu diesem Zweck führt eine Leitung 32, in der ein Rückschlagventil 33 vorgesehen ist, zu dem Handbremsventil 31 und weiter zu den Federspeichern 34 der Feststellbremsanlage. Das zu der Steuer- und Anzeigeeinheit 30" gehörende Drucksicherungsventil 23" besitzt die drei dargestellten Schaltstellungen und ist auf der einen Seite elektrisch ansteuerbar. Auf der anderen Seite besitzt es einen pneumatischen Steueranschluß 35, der zu einem entsprechenden Kolben führt. Dieser Steueranschluß 35 ist über eine Steuerleitung 36 an die von dem Regenerations-Magnetventil 16 ausgehende Leitung 20 angeschlossen. Damit ist es möglich, die Steuer- und Anzeigeeinheit 30" über das Regenerations-Magnetventil 16 anzusteuern und die Versorgungsleitung 32 abzusperren, so daß eine Betätigung des Handbremsventils 31 nicht zu einem Lösen der Feststellbremsanlage führen kann.

Andererseits ist die Steuer- und Anzeigeeinheit 30" noch einem weiteren Kreis zugeordnet. Demzufolge führt eine Leitung 26" zu dem Behälter 27".

Die Steuer- und Anzeigeeinheit 30''' ist einem vierten Kreis zugeordnet und analog aufgebaut und angeschlossen. Die Zuströmung der vom Kompressor 7 gelieferten Druckluft in der Lastlaufphase des Druckreglers 2 zu den Steuer- und Anzeigeeinheiten 30, 30', 30" und 30''' erfolgt über das Rückschlagventil 14 und eine Leitung 37. Von diesem Durchtrittsraum zweigt auch eine Leitung 38 ab, über die die vom Kompressor 7 gelieferte Druckluft zu den jeweiligen Drucksicherungsventilen 23, 23', 23" und 23''' geleitet wird. Die Leitung 38 führt andererseits auch noch zu einem Überströmventil 39 und einem nachgeschalteten Behälter 40.

Das in Fig. 1 dargestellte Steuergerät mit seinem Gehäuse 1 gestattet in Verbindung mit den angeschlossenen Anlagenteilen folgende Funktion:

Wenn das Kraftfahrzeug geparkt und die Feststellbremsanlage eingelegt ist, sind die Federspeicher 34 über das Handbremsventil 31 entlüftet. In den Behältern 27, 27', 27" und 27''' möge sich ein relativ niedriger Druck befinden, der von den Drucksensoren 24, 24', 24" und 24''' festgestellt wird, wobei entsprechende Signale der Steuerelektronik 18 beim Starten des Kraftfahrzeuges zugeführt werden. Demzufolge schaltet die Steuerelektronik 18 den Druckregler 2 in die Lastlaufphase, so daß in üblicher Weise die Auffüllung und die Druckerhöhung in den Behältern 27, 27', 27" und 27''' beginnt. Sind dabei die von den Drucksensoren 24 und 24' in den Behältern 27 und 27' feststellbaren Drücke zu niedrig, um eine Mindestverzögerung des Kraftfahrzeuges bei einem Bremsvorgang zu gewährleisten, schaltet die Steuerelektronik 18 über die Leitung 17 das Regenerations-Magnetventil 16 um, so daß Druckluft über die Steuerleitung 36 zu dem Steueranschluß 35 der Steuer- und Anzeigeeinheit 30" fließen kann und damit die Stellung eingenommen wird, in der die Versorgungsleitung 32 abgesperrt ist. Es ist zwar möglich, das Handbremsventil 31 zu betätigen. Da dieses jedoch keine Luft für das Lösen der Federspeicher 34 bereitstellen kann, bleibt die Feststellbremsanlage weiterhin eingelegt und das Fahrzeug festgebremst. Es wird also verhindert, daß das Kraftfahrzeug bereits zu diesem Zeitpunkt bewegt bzw. hinweggefahren werden kann. Das Ansteuern des Regenerations-Magnetventils 16 kann in dieser Phase nicht zu einer Regeneration des Trockners 4 führen, weil sich der Druckregler 2 in der Lastlaufphase befindet. Eine Regeneration kann nur dann ausgesteuert werden, wenn sich der Druckregler 2 in der Leerlaufphase befindet. Somit wird sich die Lastlaufphase des Druckreglers 2 fortsetzen, bis in den Behältern 27 und 27' ein Druck erreicht ist, der die eingestellte Mindestverzögerung des Fahrzeuges bei einer eventuellen Bremsung ermöglicht. Erst zu diesem Zeitpunkt steuert die Steuerelektronik 18 das Regenerations-Magnetventil 16 wieder um, so daß über die Versorgungsleitung 32 nunmehr auch Druck an dem Handbremsventil 31 zur Verfügung steht. Eine Betätigung des Handbremsventils 31 führt damit zu einem Lösen der Feststellbremsanlage. Das Fahrzeug kann bewegt werden. Es schließt sich eine weitere Druckerhöhung in den Behältern 27, 27', 27" und 27''' an, bis der vorgesehene Maximaldruck erreicht ist. Erst dann schaltet der Druckregler 2 in die Leerlaufphase um.

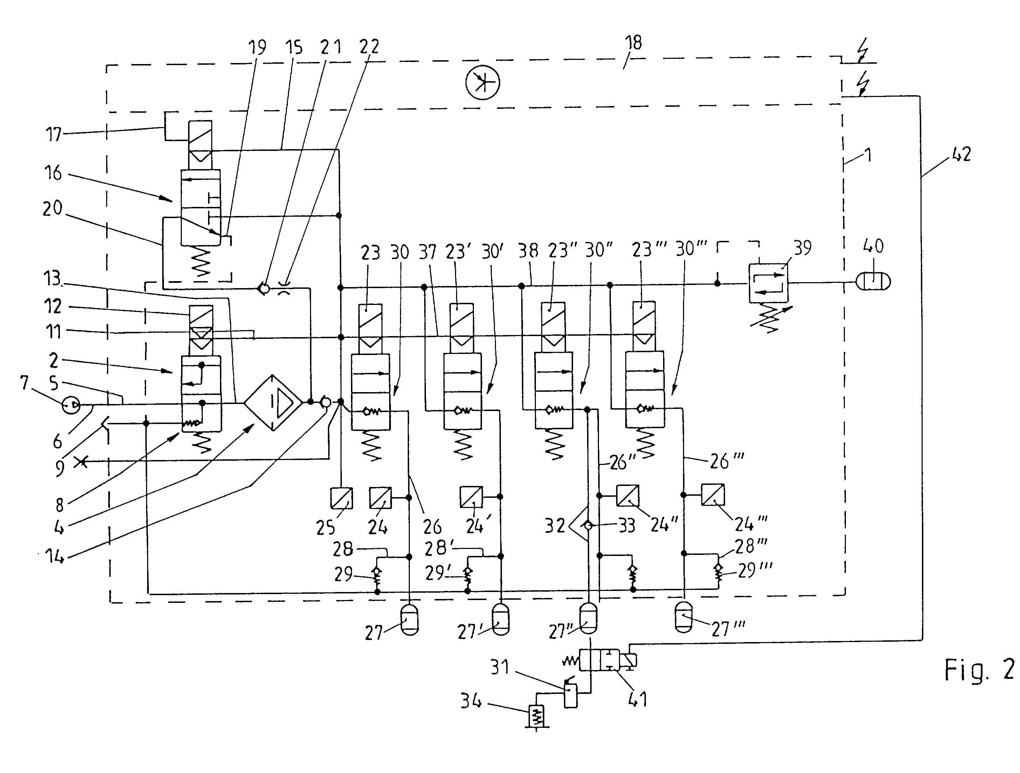

Die in Fig. 2 dargestellte Druckluftbeschaffungsanlage weist einerseits auch ein Steuergerät mit dem Gehäuse 1 auf. Dieses Steuergerät ist ganz ähnlich aufgebaut wie das in Fig. 1 dargestellte Steuergerät. Lediglich die Steuer- und Anzeigeeinheit 30" ist analog zu den übrigen Steuer- und Anzeigeeinheiten 30, 30' und 30''' aufgebaut. Die Steuerleitung 36 kommt in Fortfall, und das Drucksicherungsventil 23" besitzt keinen pneumatischen Steueranschluß 35. Die Versorgungsleitung 32 führt hier zu dem Behälter 27" und weiter über ein Sperrventil 41 zu dem Handbremsventil 31. Von der Steuerelektronik 18 führt eine Leitung 42 zu dem Sperrventil 41. Die Sperrstellung der Versorgungsleitung 32 wird also hier nicht über das Regenerations-Magnetventil 16 erreicht, sondern über ein über die Leitung 42 zu dem Sperrventil 41 geleitetes Signal. Die Funktion ist jedoch analog.

### BEZUGSZEICHENLISTE

- 1 -: Gehäuse
- 2 -: Druckregler
- 3 -: Mehrkreisschutzventil
- 4 -: Trockner
- 5 -: Eingangsanschluß
- 6 -: Leitung
- 7 -: Kompressor
- 8 -: gesteuertes Auslaßventil
- 9 -: Auslaß
- 10 -: Feder

- 11 -: Leitung
- 12 -: Magnetventil
- 13 -: Leitung
- 14 -: Rückschlagventil
- 15 -: Leitung
- 16 -: Regeneration-Magnetventil
- 17 -: Leitung
- 18 -: Steuerelektronik
- 19 -: Entlüftung
- 20 -: Leitung

- 21 -: Rückschlagventil
- 22 -: Drossel
- 23 -: Drucksicherungsventil
- 24 -: Drucksensor
- 25 -: Drucksensor
- 26 -: Leitung
- 27 -: Behälter
- 28 -: Abzweigleitung
- 29 -: Sicherheitsventil
- 30 -: Steuer- und Anzeigeeinheit

- 31 -: Handbremsventil
- 32 -: Versorgungsleitung
- 33 -: Rückschlagventil
- 34 -: Federspeicher
- 35 -: Steueranschluß
- 36 -: Steuerleitung
- 37 -: Leitung
- 38 -: Leitung
- 39 -: Überströmventil
- 40 -: Behälter

- 41 -: Sperrventil
- 42 -: Leitung

## Patentansprüche

1. Verwendung eines von einer Steuerelektronik (18) in Abhängigkeit von einem für eine Mindestverzögerung eines Kraftfahrzeuges zu niedrigen Vorratsdruck in den den Betriebsbremskreisen zugeordneten Behältern (27, 27') generierten Signals zum Absperren einer zu einem Handbremsventil (31) führenden Versorgungsleitung (32).

2. Steuergerät für eine Druckluftbeschaffungsanlage eines Kraftfahrzeuges, mit einem einen Eingangs- (5), einen Durchgangsanschluß und einen Auslaß (9) aufweisenden Gehäuse (1), in dem ein Druckregler (2) für die herangeführte Druckluft vorgesehen ist, der über ein gesteuertes Auslaßventil (8) in dessen Offenstellung mit der Atmosphäre verbindbar ist, mit einem dem Druckregler (2) nachgeschalteten Rückschlagventil (14), mit einem integrierten Mehrkreisschutzventil (3), das mehrere Steuer- und Anzeigeeinheiten (30, 30', 30" usw.) aufweist, die nach dem Rückschlagventil (14) des Druckreglers (2) abzweigen, wobei für die Betätigung des gesteuerten Auslaßventils (8) des Druckreglers (2) und der Steuer- und Anzeigeeinheiten (30, 30' usw.) eine gemeinsame Steuerelektronik (18) und zwischen dem Druckregler (2) und dem nachgeschalteten Rückschlagventil (14) ein regenerierbarer Trockner (4) vorgesehen ist, der über die gemeinsame Steuerelektronik (18) und ein Regenerations-Magnetventil (16) mit nachgeschaltetem Rückschlagventil (21) für die Ansteuerung des Trockners (4) geschaltet wird, **dadurch gekennzeichnet,** daß die dem Handbremsventil (31) zugeordnete Steuer- und Anzeigeeinheit (30'') zusätzlich eine Schließstellung für eine zu dem Handbremsventil (31) führende Versorgungsleitung (32) aufweist und einen pneumatisch ansteuerbaren Kolben zum Erreichen dieser Schließstellung besitzt, daß das Regenerations-Magnetventil (16) über eine Steuerleitung (36) mit der dem Handbremsventil zugeordneten Steuer- und Anzeigeeinheit (30'') verbunden ist, und daß die Steuerelektronik (18) zur Generierung eines Signals in Abhängigkeit von einem für eine Mindestverzögerung des Kraftfahrzeuges zu niedrigen Vorratsdruck in den den Betriebsbremskreisen zugeordneten Behältern (27, 27') ausgebildet ist, mit dem das Regenerations-Magnetventil (16) während der Lastlaufphase des Druckreglers (2) ansteuerbar ist.

3. Steuergerät nach Anspruch 2, **dadurch gekennzeichnet**, daß die Steuerleitung (36) an die vom Regenerations-Magnetventil (16) zum Trockner (4) führende Leitung vor einem Rückschlagventil (21) mit nachgeschalteter Drossel (22) angeschlossen ist.

4. Steuergerät nach Anspruch 2 oder 3, **dadurch gekennzeichnet**, daß von der dem Handbremsventil (31) zugeordneten Steuer- und Anzeigeeinheit (30'') eine weitere Leitung (26'') ausgeht, die zu einem für einen weiteren Kreis bestimmten Behälter (27'') führt.

5. Steuergerät nach Anspruch 2, **dadurch gekennzeichnet**, daß als Regeneration-Magnetventil (16) ein 3/2-Wege-Magnetventil mit nachgeschaltetem Rückschlagventil (21) für die Regeneration vorgesehen ist.

6. Druckluftbeschaffungsanlage eines Kraftfahrzeuges, mit einem Steuergerät, das ein Gehäuse (1) mit einem Eingangs- (5), einem Durchgangsanschluß und einem Auslaß (9) aufweist, in dem ein Druckregler (2) mit nachgeschaltetem Rückschlagventil (14) für die herangeführte Druckluft, der über ein gesteuertes Auslaßventil (8) in dessen Offenstellung mit der Atmosphäre verbindbar ist, und ein integriertes Mehrkreisschutzventil (3) vorgesehen sind, das mehrere Steuer- und Anzeigeeinheiten (30, 30', 30'' usw.) aufweist, die nach dem Rückschlagventil (14) des Druckreglers (2) abzweigen, wobei für die Betätigung des gesteuerten Auslaßventils (8) des Druckreglers (2) und der Steuer- und Anzeigeeinheiten (30, 30' usw.) eine gemeinsame Steuerelektronik (18) und zwischen dem Druckregler (2) und dem nachgeschalteten Rückschlagventil (14) ein regenerierbarer Trockner (4) vorgesehen ist, der über die gemeinsame Steuerelektronik (18) und ein Regenerations-Magnetventil (16) mit nachgeschaltetem Rückschlagventil (21) für die Ansteuerung des Trockners (4) geschaltet wird, **dadurch gekennzeichnet,** daß in einer Versorgungsleitung (32), die von der dem Handbremsventil (31) zugeordneten Steuer- und Anzeigeeinheit (30") zu dem Handbremsventil (31) führt, ein Sperrventil (41), insbesondere ein Magnetventil, angeordnet ist, und daß die Steuerelektronik (18) des Steuergeräts zur Generierung eines Signals in Abhängigkeit von einem für eine Mindestverzögerung des Kraftfahrzeuges zu niedrigen Vorratsdruck in den den Betriebsbremskreisen zugeordneten Behältern (27, 27') ausgebildet ist, mit dem das Sperrventil (41) während der Lastlaufphase des Druckreglers (2) ansteuerbar ist.

7. Druckluftbeschaffungsanlage nach Anspruch 6, **dadurch gekennzeichnet,** daß in der zum Handbremsventil (31) führenden Versorgungsleitung (32) ein Behälter (27") für Vorratsluft vorgesehen ist, und daß das Sperrventil (41) in der Versorgungsleitung (32) zwischen dem Behälter (27") und dem Handbremsventil (31) angeordnet ist.

## Claims

1. Use of a signal to shut off a supply line (32) to a hand brake valve (31), the signal being generated by a control unit (18) with respect to pressures in the reservoirs (27, 27') assigned to the service braking circuits, the pressures being too low to guarantee a minimum of deceleration of the vehicle.

2. Controller for installation of compressed air production for vehicles comprising a housing (1) having an inlet (5), a chamber, an outlet (9), an unloader (2) for the compressed air, the unloader being connectable with the atmosphere by a controlled outlet valve (8) when in its opening position, a check valve (14) downstream the unloader (2), an integrated multi-circuit control valve (3) having a number of control and monitoring units (30, 30', 30" etc.) branching off downstream the check valve (14) of the unloader (2), a common control unit (18) to actuate the controlled outlet valve (8) of the unloader (2) and the control and monitoring units (30, 30' etc.), and a regenerable air-drier (4) between the unloader (2) and the downstream positioned check valve (14), the air-drier (4) being controlled by the common control unit (18) and a regeneration solenoid valve (16) with a downstream positioned check valve (21) for purpose of controlling the air-drier (4), **wherein** the control and monitoring unit (30'') being assigned to the hand brake valve (31) in addition has a closing position to shut off a supply line (32) to the hand brake valve (31) and has a pneumatically controllable piston to reach the closing position, the regeneration solenoid valve (16) is connected with the control and monitoring unit (30") assigned to the hand brake valve via a control line (36), and the control unit (18) is designed to generate a signal with respect to pressures in the reservoirs (27, 27') assigned to the service braking circuits, the pressures being too low to guarantee a minimum of deceleration of the vehicle, the regeneration solenoid valve (16) being controllable by the signal during the pumping condition of the unloader (2).

3. The controller of claim 2, **wherein** the control line (36) is connected with the line connecting the regeneration solenoid valve (16) and the air-drier (4) upstream a check valve (21) having a throttle (22) positioned downstream.

4. The controller of claims 2 or 3, **wherein** a further line (26") branches off from the control and monitoring unit (30") being assigned to the hand brake valve (31), the line being connected with a reservoir (27'') assigned to a further circuit.

5. The controller of claim 2, **wherein** a 3/2 directional solenoid valve is provided as the regeneration solenoid valve (16), the 3/2 directional solenoid valve having a check valve (21) positioned downstream for regeneration purpose.

6. Installation for compressed air production for a vehicle comprising a housing (1) having an inlet (5), a chamber, an outlet (9), an unloader (2) for the compressed air, the unloader being connectable with the atmosphere by a controlled outlet valve (8) when in its opening position, a check valve (14) downstream the unloader (2), an integrated multi-circuit control valve (3) having a number of control and monitoring units (30, 30', 30" etc.) branching off downstream the check valve (14) of the unloader (2), a common control unit (18) to actuate the controlled outlet valve (8) of the unloader (2) and the control and monitoring units (30, 30' etc.), and a regenerable air-drier (4) between the unloader (2) and the downstream positioned check valve (14), the air-drier (4) being controlled by the common control unit (18) and a regeneration solenoid valve (16) with a downstream positioned check valve (21) for purpose of controlling the air-drier (4), **wherein** a separation valve (41), especially a solenoid valve, is provided in a supply line (32), the supply line connecting the control and monitoring unit (30") assigned to the hand brake valve (31) with the hand brake valve (31), and the control unit (18) of the controller is designed to generate a signal with respect to pressures in the reservoirs (27, 27') assigned to the service braking circuits, the pressures being too low to guarantee a minimum of deceleration of the vehicle, the regeneration solenoid valve (16) being controllable by the signal during the pumping condition of the unloader (2).

7. The installation of claim 6, **wherein** a reservoir (27") is provided in the supply line (32) to the hand brake valve (31) and the separation valve (41) is arranged in the supply line (32) between the reservoir (27") and the hand brake valve (31).

## Revendications

1. Utilisation d'un signal généré par un système électronique de commande (18) en fonction d'une pression de réserve dans les réservoirs (27, 27') assignés aux circuits de frein de service qui ne suffit pas à assurer une capacité minimale de freinage d'un véhicule automobile, ce signal étant utilisé pour la coupure d'une conduite d'alimentation (32) allant à une soupape de frein à main (31).

2. Dispositif de régulation pour une installation d'alimentation en air comprimé d'un véhicule automobile, avec un carter (1) présentant un raccordement d'admission (5), un raccordement de passage et un échappement (9), et dans lequel est prévu, pour l'air comprimé admis, un régulateur de pression (2) pouvant communiquer avec l'atmosphère via une soupape d'échappement commandée (8) lorsque celle-ci est en position d'ouverture, ce dispositif de régulation étant aussi équipé d'une soupape de retenue (14) en aval du régulateur de pression (2) et d'une soupape de protection intégrée pour circuits multiples (3) dotée de plusieurs unités de commande et de contrôle (30, 30', 30", etc) branchées en aval de la soupape de retenue (14) du régulateur de pression (2), dispositif de régulation où il est prévu un système électronique de commande (18) commun pour l'actionnement de la soupape d'échappement commandée (8) du régulateur de pression (2) et des unités de commande et de contrôle (30, 30', etc) et où il est prévu un sécheur régénérable (4) entre le régulateur de pression (2) et la soupape de retenue en aval (14), sécheur régénérable (4) pouvant être commandé par un système électronique de commande (18) et une soupape de régénération à solénoïde (16) comprenant une soupape de retenue (21) en aval auxquels ce séchoir (4) est couplé, dispositif de régulation **caractérisé** en ce que l'unité de commande et de contrôle (30") assignée à la soupape de frein à main (31) présente en plus une position de fermeture pour une conduite d'alimentation (32) conduisant à la soupape de frein à main (31) ainsi qu'un piston pouvant être commandé par voie pneumatique et destiné à l'obtention de cette position de fermeture, en ce que la soupape de régénération à solénoïde (16) est connectée via une conduite de commande (36) à l'unité de commande et de contrôle (30") assignée à la soupape de frein à main et en ce que le dispositif électronique de commande (18) est conçu pour générer un signal en fonction d'une pression de réserve dans les réservoirs (27, 27') assignés aux circuits de frein de service qui ne suffit pas à assurer une capacité minimale de freinage du véhicule automobile, ce signal pouvant être utilisé pour la commande de la soupape de régénération à solénoïde (16) pendant la phase de marche en charge du régulateur de pression (2).

3. Dispositif de régulation suivant la revendication 2 caractérisé en ce que la conduite de commande (36) est raccordée à la conduite allant de la soupape de régénération à solénoïde (16) au sécheur (4) avant une soupape de retenue (21) avec un étranglement (22) en aval.

4. Dispositif de régulation suivant l'une quelconque des revendications 2 ou 3, caractérisé en ce que de l'unité de commande et de contrôle (30") assignée à la soupape de frein à main (31) est issue d'une conduite supplémentaire (26'') allant à un réservoir (27'') destiné à un circuit supplémentaire.

5. Dispositif de régulation suivant la revendication 2 caractérisé en ce que, pour la régénération, il est prévu, comme soupape de régénération à solénoïde (16), une soupape à solénoïde à 3/2 voies comportant une soupape de retenue (21) en aval.

6. Installation d'alimentation en air comprimé d'un véhicule automobile, avec un dispositif de régulation présentant un carter (1) qui comporte un raccordement d'admission (5), un raccordement de passage et un échappement (9), et dans lequel est prévu, pour l'air comprimé admis, un régulateur de pression (2) avec une soupape de retenue (14) en aval, ce régulateur pouvant communiquer avec l'atmosphère via une soupape d'échappement commandée (8) lorsque celle-ci est en position d'ouverture, dans ce dispositif de régulation étant aussi prévu une soupape de protection intégrée pour circuits multiples (3) dotée de plusieurs unités de commande et de contrôle (30, 30', 30", etc) branchées en aval de la soupape de retenue (14) du régulateur de pression (2), dispositif de régulation où il est prévu un système électronique de commande (18) commun pour l'actionnement de la soupape d'échappement commandée (8) du régulateur de pression (2) et des unités de commande et de contrôle (30, 30', etc) et où il est prévu un sécheur régénérable (4) entre le régulateur de pression (2) et la soupape de retenue en aval (14), sécheur régénérable (4) pouvant être commandé par un système électronique de commande (18) et une soupape de régénération à solénoïde (16) comprenant une soupape de retenue (21) en aval auxquels ce séchoir (4) est couplé, installation **caractérisée** en ce que dans une conduite d'alimentation (32) allant de l'unité de commande et de contrôle assignée à la soupape de frein à main (30") à la soupape de frein à main (31) est disposée une soupape d'arrêt (41), en particulier une soupape à solénoïde et en ce que le système électronique de commande (18) du dispositif de régulation est conçu pour générer un signal dépendant d'une pression de réserve dans les réservoirs (27, 27') assignés aux circuits de frein de service ne suffisant pas à assurer une capacité minimale de freinage du véhicule automobile, ce signal pouvant être utilisé pour la commande de la soupape d'arrêt (41) pendant la phase de marche en charge du régulateur de pression (2).

7. Installation d'alimentation en air comprimé suivant la revendication 6, **caractérisée** en ce que, dans la conduite menant à la soupape de frein à main (31), il est prévu un réservoir (27") pour de l'air de réserve, et en ce que la soupape d'arrêt (41) est disposée dans la conduite d'alimentation (32), entre le réservoir (27") et la soupape de frein à main (31).
